# EUROPÄISCHE PATENTANMELDUNG

(11) **EP 0 546 278 A1**
(43) Veröffentlichungstag der Anmeldung: **16.06.1993**
(21) Anmeldenummer: 92117555.0
(22) Anmeldetag: 14.10.1992
(51) Int. Cl.: B60P 7/13

(54) **Anordnung zum Zentrieren und Sichern von Ladeeinheiten auf Fahrzeug-Ladeflächen**

(30) Priorität: 12.11.1991 DE 9114038 U
(71) Anmelder: WESTERWÄLDER EISENWERK GERHARD GmbH, D-57586 Weitefeld (DE)
(72) Erfinder: Gerhard, Helmut, Verstorben (DE)
(74) Vertreter: Strehl Schübel-Hopf Groening & Partner

(57) **Zusammenfassung**

Um mittelgroße Ladeeinheiten (12) mit quadratischer Grundfläche und einer Kantenlänge von etwa 2,5 m auf einer für den Transport von ISO-Ladeeinheiten ausgerüsteten Fahrzeug-Ladefläche (10) arretieren zu können, ist diese mit zusätzlichen Drehschlössern (13) ausgerüstet, die im Abstandsbereich zwischen den benachbarten Kanten jeweils zweier hintereinanderstehender Ladeeinheiten (12) angeordnet sind. Beide Ladeeinheiten (12) lassen sich dadurch gleichzeitig an ihren Kantenbereichen sichern. In Öffnungen, die in den Eckbereichen der Ladeeinheiten (12) vorgesehen sind, greifen Zentrierdorne (14) ein, die an der Ladefläche (10) oder an einer Hilfsplatte angebracht sein können.

## Beschreibung

In jüngster Zeit ist in der Verkehrswirtschaft der Einsatz von mittelgroßen Ladeeinheiten (Containern oder Flats) mit quadratischem Grundriß und einer Kantenlänge von etwa 2,5 m vorgeschlagen worden. Dieses Maß ist günstig, weil es die Aufnahme von vier quadratischen ISO-Paletten mit einer Kantenlänge von 1200 mm oder 6 EURO-Paletten der Größe 1200 mm x 800 mm gestattet. Der dabei zwischen der theoretischen Nettostaufläche von 2400 mm x 2400 mm und dem Außenmaß der vorgeschlagenen Ladeeinheiten verbleibende Spielraum ist im Hinblick auf einen etwaigen Überhang von Paletten und für die Eigendicke von etwaigen, die Paletten umschließenden Boxwänden zweckmäßig.

Eine Schwierigkeit besteht jedoch darin, daß sich die vorgeschlagenen Ladeeinheiten nicht ohne weiteres auf ISO-Tragfahrzeugen arretieren lassen. Zwar ist es möglich, beispielsweise drei der vorgeschlagenen Ladeeinheiten hintereinander auf einem mit entsprechenden Arretierelementen speziell ausgerüsteten Hilfsrahmen anzuordnen und diesen an seiner Unterseite mit Öffnungen zum Eingriff von Sicherungselementen zu versehen, wie sie auf Tragfahrzeugen für 20'-ISO- oder Binnenladeeinheiten und/oder für CEN-Wechselbehälter der Gruppe C vorgesehen sind, doch erhöht ein solcher Hilfsrahmen das Taragewicht der Fahrzeugladung in nicht unerheblichem Maße.

Aus EP-A-0 446 388 ist eine Wechselbehälter-Transporteinrichtung bekannt, bei der mehrere mittelgroße Ladeeinheiten ohne zusätzlichen Hilfsrahmen unmittelbar an der Fahrzeug-Ladefläche arretiert werden. Dort sind einerseits zur Zentrierung der Ladeeinheiten relativ zum Trägerfahrzeug mittig an diesem kegelstumpfförmige Zentrierklötze und andererseits zum Sichern der Ladeeinheiten seitlich an diesen angreifende Verriegelungshaken vorgesehen. Diese Zentrier- und Sicherungselemente stellen jedoch sowohl am Fahrzeug als auch an den Ladeeinheiten spezielle Ausrüstungen dar, die dazu führen, daß weder das Fahrzeug zum Transport von ISO-Ladeeinheiten brauchbar ist, noch die dort verwendeten Ladeeinheiten auf ISO-Tragfahrzeugen gesichert werden können. Mit anderen Worten ist die bekannte Transporteinrichtung nicht ISO-kompatibel.

Aus AT-B-333 607 ist es bekannt, an einem Fahzeugchassis seitlich jeweils drei Zentrier- und Sicherungselemente zum Arretieren zweier hintereinander stehender Container vorzusehen. Dort handelt es sich bei den beiden äußeren Elementen um Drehschlösser, die wie üblich zum Eingriff in Eckbeschläge normaler ISO-Container bestimmt sind, während das mittlere Element ein stationärer Zentrierdorn ist, der beim Aufsetzen der Container die Drehschloßköpfe in die Öffnungen der Eckbeschläge einführen soll.

US-A-5 020 947 zeigt eine Anordnung mit drei nach oben ragenden Zapfen zur Sichern von zwei hintereinander stehenden Containern an einer Fahrzeug-Ladefläche. Alle drei Zapfen sind gemeinsam vertikal bewegbar, wobei der mittlere Zapfen dazu dient, die äußeren Zapfen, die zum Eingriff in die benachbarten Eckbeschläge kürzerer Container bestimmt sind, beim Aufsetzen eines langen Containers unter die Ladefläche zu versenken.

Der Erfindung liegt die Aufgabe zugrunde, eine Anordnung zu schaffen, die es ermöglicht, mehrere Ladeeinheiten, insbesondere quadratische Ladeeinheiten mit einer Kantenlänge von rund 2,5 m, unmittelbar auf Fahrzeug-Ladeflächen zu zentrieren und zu sichern, die für den Transport auch von ISOLadeeinheiten ausgelegt sind.

Die erfindungsgemäße Lösung dieser Aufgabe ist in Anspruch 1 angegeben. Bei praktischer Ausführung der Erfindung sind an der Ladefläche eines ISO-Tragfahrzeugs etwa zur Aufnahme von drei der genannten Ladeeinheiten lediglich vier zusätzliche Drehschlösser vorzusehen, um alle drei Ladeeinheiten ausreichend zu arretieren. Für ISO-Container ausgerüstete Fahrzeuge lassen sich daher ohne großen Aufwand nachrüsten. Da die Ladeeinheiten unmittelbar auf der Ladefläche arretiert werden, erübrigt sich ein sowohl von den Herstellkosten als auch wegen der Erhöhung des Taragewichts unerwünschter Hilfsrahmen.

Die in Anspruch 1 angegebenen zusätzlichen Zentrierelemente sind in der vorteilhaften Weiterbildung der Erfindung nach Anspruch 2 jeweils paarweise an Hilfsplatten angebracht, die jeweils eine zwischen den beiden Zentrierelementen befindliche Öffnung zum Durchtritt des betreffenden Drehschlosses aufweist. Die Maßnahme des Anspruchs 3 dient dabei einer Verbesserung der Zentrierung gegenüber der Fahrzeugladefläche, wobei in dieser lediglich die entsprechenden zusätzlichen Öffnungen vorzusehen sind.

In der Alternative des Anspruchs 4 sind die zusätzlichen Zentrierelemente an der Fahrzeugladefläche selbst angebracht, wodurch sich der Aufwand beim Nachrüsten herkömmlicher ISO-Tragfahrzeuge etwas erhöht. Die Ausgestaltung nach Anspruch 5 ist dabei zweckmäßig, um den Transport von ISO-Ladeeinheiten mit den erfindungsgemäß ausgerüsteten Tragfahrzeugen nicht zu behindern.

Anspruch 6 bezieht sich auf Abmessungen, die wiederum in Hinblick auf eine ISO-Kompatibilität bevorzugt werden. Der darin genannte Abstand von 280 mm zwischen benachbarten Zentrierelementen ist identisch mit dem Abstand von Arretierelementen, wie sie an ISO-Tragfahrzeugen zur Aufnahme der benachbarten Eckbeschläge zweier hintereinander stehender Ladeeinheiten vorgesehen sind.

In der Ausgestaltung nach Anspruch 7 ergibt sich die weitere Möglichkeit, diejenigen Arretierelemente, die zum Eingriff in Eckbeschläge von ISO- Ladeeinheiten vorhandenen sind, in Zusammenhang mit der erfindungsgemäßen Anordnung zu weiteren Sicherung einzelner der hier verwendeten nicht ISO-gerechten quadratischen Ladeeinheiten auszunutzen.

Ausführungsbeispiele der Erfindung werden nachstehend anhand der Zeichnungen näher erläutert. Darin zeigt
Figur 1 eine schematische Draufsicht auf eine Fahzeug-Ladefläche, wobei drei auf diese aufgesetzte Ladeeinheiten angedeutet sind,
Figur 2 eine schematische Darstellung der Unterseite einer Ladeeinheit,
Figur 3 einen Teilbereich der Figur 1 zur Erläuterung der gegenseitigen Anordnung und Zusammenwirkung zwischen Zentrier- und Sicherungselementen und zwei benachbarten Ladeeinheiten,
Figur 4 eine teilweise geschnittene Seitenansicht der Figur 3, und
Figur 5 eine der Figur 4 ähnliche Darstellung einer alternativen Ausführungsform.

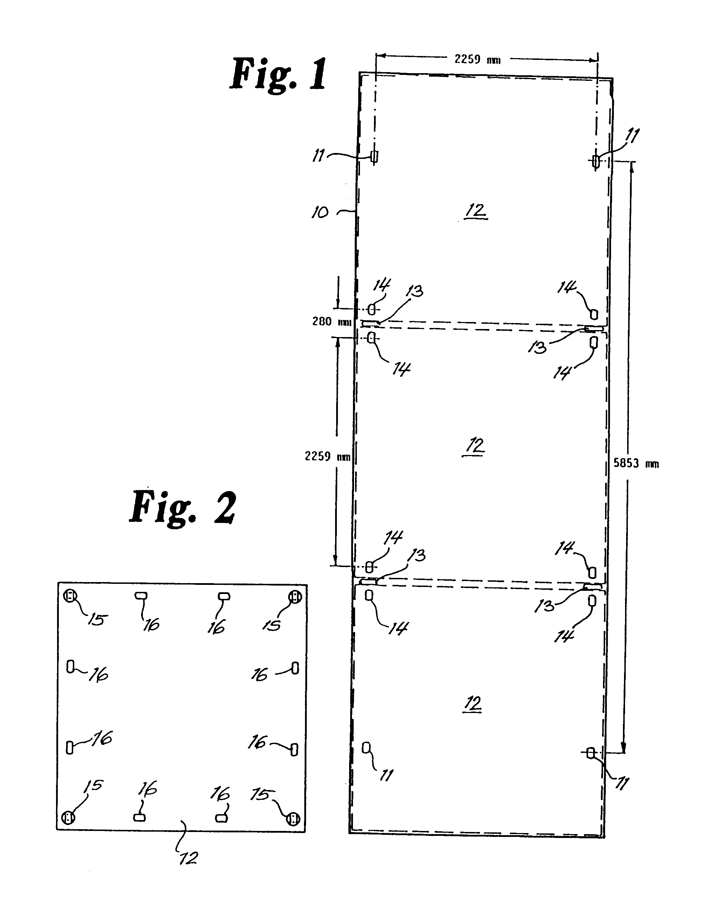

In Figur 1 ist mit ausgezogenen Linien schematisch die Ladefläche eines ISO-Tragfahrzeugs gezeigt, bei dem es sich um einen Eisenbahnwagen oder ein Straßenfahrzeug handeln kann. In dem dargestellten Fall ist eine Kraftfahrzeug-Ladefläche einer 20'-ISO-Ladeeinheit angenommen. Die Ladefläche 10, bei der es sich auch lediglich um einen Chassisrahmen handeln kann, ist mit vier Drehschlössern 11 versehen, die zum Eingriff in die vier unteren Eckbeschläge der 20'-ISO-Ladeeinheit bestimmt sind und in Fahrtrichtung einen Mittenabstand von 5853 mm und quer dazu einen solchen von 2259 mm einhalten.

In gestrichelten Linien sind in Figur 1 drei auf die Ladefläche 10 aufgesetzte nicht ISO-gerechte Ladeeinheiten 12 veranschaulicht. Zur Arretierung dieser Ladeeinheiten 12 ist die Ladefläche 10 zusätzlich mit vier Drehschlössern 13 ausgerüstet, die im Abstandsbereich zwischen den benachbarten Kanten jeweils zweier Ladeeinheiten 12 angeordnet sind. Wie in Figur 1 gezeigt, haben die beiden auf der gleichen Querachse liegenden Drehschlösser 13 ebenso wie die Drehschlösser 11 einen gegenseitigen Mittenabstand von 2259 mm, sind aber so ausgerichtet, daß ihre Köpfe im entriegelten Zustand quer zur Fahrtrichtung stehen.

In Fahrtrichtung vor und hinter jedem Drehschloß 13 ist die Ladefläche 10 ferner mit jeweils einem Dorn 14 ausgerüstet. Anstelle von Dornen können grundsätzlich auch andere Befestigungsmittel verwendet werden. Die acht Dorne 14 können wie bei herkömmlichen Eisenbahn-Tragfahrzeugen abklappbar und in sonstiger Weise versenkbar gestaltet sein, um die Aufnahme herkömmlicher ISO-Ladeeinheiten nicht zu behindern. Die vier der mittleren Ladeeinheit 12 zugeordneten Dorne 14 haben sowohl in Fahrtrichtung als auch quer dazu jeweils einen Mittenabstand von 2259 mm und dienen zum Eingriff in Öffnungen, die in den unteren vier Eckbereichen jeder Ladeeinheit 12 vorgesehen sind, um diese gegenüber der Ladefläche 10 zu zentrieren.

Bei den in Figur 1 angegebenen Abmessungen lassen sich auf der Ladefläche 10 drei quadratische Ladeeinheiten 12 mit einer Kantenlänge von rund 2,5 m verladen. Eine kürzere Kantenlänge, insbesondere 2438 mm, wird bevorzugt, weil sie der für den ISO-Verkehr zulässigen Höchstbreite entspricht.

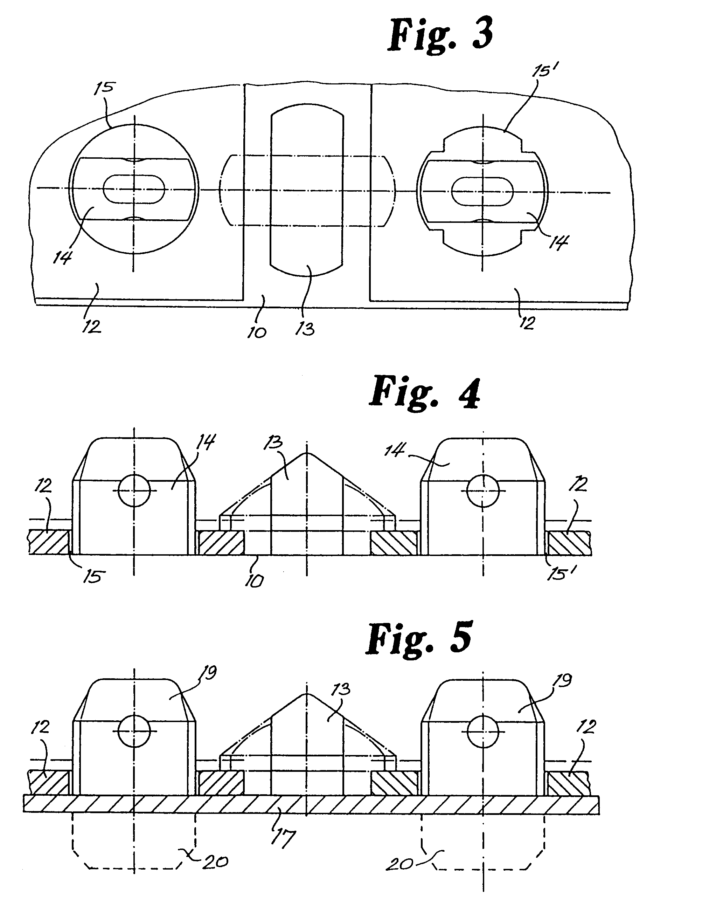

Figur 3 zeigt in vergrößerter Darstellung einen Teilbereich der Figur 1 mit zwei Dornen 14 und einem dazwischen liegenden Drehschloß 13. Der Kopf des Drehschlosses 13 ist mit ausgezogenen Linien in seiner Entriegelungsstellung und mit strichpunktierten Linien in seiner verriegelten Stellung gezeigt, in der er die einander zugewandten unteren Kantenbereiche zweier hintereinander stehender Ladeeinheiten 12 übergreift und diese gegen Kippen und Springen sichert.

Die in den Eckbereichen der Ladeeinheiten 12 vorgesehenen Öffnungen für den Eingriff der Dorne 14 sind in Figur 3 mit 15 bzw. 15' bezeichnet. In der in Figur 3 linken Ladeeinheit 12 ist die Öffnung 15 kreisrund; in der rechten Ladeeinheit ist die Öffnung 15' mit vier Einsprüngen versehen, so daß sich eine noch bessere Zentrierwirkung beim Eingriff des Domes 14 ergibt. In einer weiteren (nicht dargestellten) Version kann auch in eine etwas größer dimensionierte kreisrunde Öffnung eine kreisrunde Zentrierplatte mit einem dem Dorn 14 entsprechenden Langloch eingelegt sein.

In der in Figur 4 gezeigten, teilweise geschnittenen Seitenansicht der Anordnung nach Figur 3 bezeichnet die Grundlinie 10 die Oberfläche der Ladefläche. An dieser sind die Dorne 14 versenk-oder abklappbar montiert. Ebenso ist an der Ladefläche 10 das Drehschloß 13 in üblicher Weise durch einen Gewindetrieb höhenverstellbar und nach unten unter die Oberfläche der Ladefläche 10 zurückziehbar.

Der Mittenabstand der Dorne 14 beträgt 280 mm, wie in Figur 1 eingetragen. Das Drehschloß 13 ist mittig dazwischen angeordnet. Je nach den Abmessungen der aufzunehmenden Ladeeinheiten 12 kann es sich bei dem Drehschloß 13 um ein übliches ISO-Drehschloß handeln; in Figur 3 und 4 ist aber eine Ausführung mit gegenüber den ISO-Maßen längerem Kopf gezeigt, um eine erhöhte Flexibilität hinsichtlich der genauen Außenabmessungen des Grundrahmens der Ladeeinheiten 12 zu gewährleisten.

Die in Figur 1 mittlere Ladeeinheit 12 wird durch die vier Dorne 14, die in die vier Öffnungen 15 bzw. 15' eingreifen, zentriert, und durch die vier Drehschlösser 13 in deren verriegelten Zustand gegen Kippen und Springen gesichert. Da, wie anhand von Figur 3 erläutert, die Öffnungen 15, 15' in zwei um 90 versetzten Richtungen symmetrisch ausgebildet sind, kann die quadratische Ladeeinheit 12 in beliebiger Ausrichtung auf die Ladefläche 10 aufgesetzt werden.

Die beiden in Figur 1 äußeren Ladeeinheiten 12 werden im Bereich ihrer der mittleren Ladeeinheit 12 zugewandten Kanten durch die beiden dort vorhandenen Dorne 14 zentriert und durch die beiden Drehschlösser 13 gegen Kippen gesichert. Zur weiteren Zentrierung und Sicherung der beiden äußeren Ladeeinheiten 12 werden die ISO-Drehschlösser 11 herangezogen, für deren Eingriff in den unteren Rahmenelementen der Ladeeinheit 12 entsprechende Öffnungen 16 ausgebildet sind. Gemäß Figur 2 weist jede Ladeeinheit 12 insgesamt acht, zu ihren Längs- und Querachsen jeweils symmetrisch angeordnete Öffnungen 16 auf, so daß es wiederum möglich ist, die Ladeeinheit 12 auch in einem der beiden äußeren Bereiche mit beliebiger Orientierung auf die Ladefläche 10 zu setzen.

In der Ausführungsform nach Figur 3 und 4 ist eine Fahrzeug-Ladefläche 10, die ursprünglich nur für den Transport einer 20'-ISO-Ladeeinheit mit den entsprechenden ISO-Drehschlössern 11 ausgerüstet ist, zur Aufnahme der hier beschriebenen quadratischen, mittelgroßen Ladeeinheiten 12 zusätzlich mit den vier Drehschlössern 13 und den acht Dornen 14 nachzurüsten.

In Verbindung mit der in Figur 5 gezeigten Version ist eine Nachrüstung von Dornen 14 nicht erforderlich. In diesem Fall wird mit einer Hilfsplatte 17 gearbeitet, die eine mittlere Öffnung 18 zum Durchtritt des Drehschlosses 13 aufweist und auf beiden Seiten der Öffnung 18 einen starren Dorn 19 trägt. Die Dorne 19 sind in einem Mittenabstand von 280 mm an der Platte 17 befestigt.

Die untere Fläche der Hilfsplatte 17 kann eben sein oder, wie in Figur 5 gestrichelt angedeutet, im Bereich der Dorne 19 nach unten ragende Vorsprünge 20 aufweisen, zu deren Aufnahme entsprechende Aussparungen in der Fahrzeug-Ladefläche 10 vorzusehen sind. Derartige Aussparungen sind an denjenigen Positionen vorzusehen, an denen in Figur 1 die Dorne 14 gezeigt sind. Gegenüber einer Hilfsplatte 17 mit ebener unterer Fläche bewirken die Vorsprünge 20 eine sicherere Festlegung der Hilfsplatte 17 gegenüber der Ladefläche 10 und damit eine bessere Zentrierung der Ladeeinheiten 12; gegenüber an der Ladefläche 10 selbst angebrachten Dornen 14 ergibt sich der Vorteil, daß die dann erforderlichen Ausnehmungen weniger Nachrüst-Aufwand erfordern.

## Patentansprüche

1. Anordnung zum Zentrieren und Sichern von Ladeeinheiten (12) auf einer mit Drehschlössern (13) versehenen Fahrzeug-Ladefläche (10), wobei die Ladeeinheiten (12) in ihren unteren Eckbereichen mit Öffnungen (15) zum Eingriff von Arretierelementen (14; 19) versehen sind,
dadurch gekennzeichnet,
daß die Drehschlösser (13) an Stellen angeordnet sind, die sich im Abstandsbereich jeweils zwischen zwei hintereinander auf der Ladefläche (10) stehenden Ladeeinheiten (12) befinden, und zu deren Sicherung so betätigbar sind, daß sie untere Randbereiche der Ladeeinheiten (12) übergreifen, und
daß zusätzliche Zentrierelemente (14; 19) zum Eingriff in die in den Eckbereichen der Ladeeinheiten (12) befindlichen Öffnungen (15) vorgesehen sind.

2. Anordnung nach Anspruch 1, wobei jeweils zwei der Zentrierelemente (19) an einer Platte (17) angebracht sind, die eine dazwischen befindliche Öffnung (1) zum Durchtritt eines der Drehschlösser (13) aufweist.

3. Anordnung nach Anspruch 2, wobei die Platte (17) auf ihrer von den Zentrierelementen (19) abgewandten Fläche mindestens einen Vorsprung (20) zum Eingriff in eine in der Ladefläche (10) vorgesehene Öffnung aufweist.

4. Anordnung nach Anspruch 1, wobei die Zentrierelemente (14) zusätzlich zu den Drehschlössern (13) an der Ladefläche (10) angebracht sind.

5. Anordnung nach Anspruch 4, wobei die Zentrierelemente (14) als versenk- oder abklappbare Dorne ausgebildet sind.

6. Anordnung nach einem der Ansprüche 1 bis 5, wobei die Ladeeinheiten (12) quadratische Grundflächen mit einer Kantenlänge von im wesentlichen 2,5 m, vorzugsweise 2438 mm, haben und der Mittenabstand zwischen benachbarten Zentrierelementen (14; 19) in Fahrzeuglängsrichtung 280 mm beträgt.

7. Anordnung nach Anspruch 6, wobei die Ladeeinheiten (12) in ihren unteren vier Kantenbereichen jeweils zwei weitere, zwischen den Ekken und symmetrisch zu den Kantenmitten angeordnete Öffnungen (16) zum Eingriff von an der Ladefläche (10) standardmäßig vorgesehenen Arretierungselementen (11) aufweisen.
